# EUROPÄISCHE PATENTSCHRIFT

(11) **EP 2 822 896 B1**
(45) Veröffentlichungstag und Bekanntmachung des Hinweises auf die Patenterteilung: **03.05.2017**
(21) Anmeldenummer: 13707878.8
(22) Anmeldetag: 07.03.2013
(51) Int. Cl.: C01B 33/12, C01B 33/157, C01B 33/187, B05D 5/00, B82Y 30/00, C01B 33/141, C01B 33/158, C03B 19/06, C03C 17/25, C03C 3/076, C03C 8/02

(54) **VERFAHREN ZUR HERSTELLUNG UND VERARBEITUNG EINER PASTÖSEN SIO2-MASSE, SOWIE DEREN VERWENDUNG**
PROCESS FOR PRODUCING AND PROCESSING A PASTE-LIKE SIO2 COMPOSITION, AND THE USE THEREOF
PROCÉDÉ DE PRODUCTION ET DE TRANSFORMATION D'UNE MATIÈRE PÂTEUSE À BASE DE SIO2 ET UTILISATION DE CETTE MATIÈRE

(30) Priorität: 09.03.2012 DE 102012004564
(43) Veröffentlichungstag der Anmeldung: 14.01.2015
(73) Patentinhaber: Heraeus Quarzglas GmbH & Co. KG, 63450 Hanau (DE)
(72) Erfinder: WEBER, Jürgen, 63801 Kleinostheim (DE); TRAEGER, Norbert, 63477 Maintal (DE); SCHEICH, Gerrit, 63500 Seligenstadt (DE); WERDECKER, Waltraud, 63456 Hanau (DE); SCHENK, Christian, 55218 Ingelheim (DE); PEEKHAUS, Joachim, D-63636 Brachttal (DE); MEYER-MERGET, Kerstin, 63755 Alzenau (DE); PANKALLA, Sebastian, 64342 Seeheim-Jugenheim (DE)
(74) Vertreter: Staudt, Armin Walter
(86) Internationale Anmeldenummer: PCT/EP2013/054573
(87) Internationale Veröffentlichungsnummer: WO 2013/131995

(56) Entgegenhaltungen:
- EP-A1- 2 070 886
- DE-A1- 10 344 189
- DE-A1-102006 046 619
- US-A- 4 042 361

## Beschreibung

Die Erfindung betrifft ein Verfahren zur Herstellung einer pastösen SiO₂-Masse unter Verwendung eines homogenisierten SiO₂-Grundschlickers, wobei der SiO₂-Grundschlicker einem Trocknungsschritt unter Bildung einer SiO₂-Trockenmasse unterzogen und mittels eines Wiederbefeuchtungsschrittes weiterverarbeitet wird. Weiterhin betrifft die Erfindung die Verwendung einer pastösen SiO₂-Masse.

### Stand der Technik

Das sogenannte Schlickergießverfahren ist in der keramischen Verfahrenstechnik zur Herstellung keramischer oder glasiger Bauteile gebräuchlich, insbesondere auch zur Herstellung von Quarzglasbauteilen. Aus DE 101 14 484 A1 ist ein Schlickergießverfahren zur Herstellung eines Kompositwerkstoffs mit hohem SiO₂-Gehalt bekannt. Hierbei wird eine wässrige, dünnflüssige Suspension mit amorphem Kieselsäurestaub und mindestens zwei weiteren SiO₂-Teilchen-fraktionen in einer Kugelmühle vermischt und zu einem homogenen Schlicker verarbeitet. Dieser Schlicker wird in üblichen Druckgussverfahren zu einem SiO₂-Grünkörper verarbeitet und dabei geformt. Alternativ kann der Schlicker gemäß DE 101 14 484 A1 durch Gel-bildende Komponenten, wie beispielsweise Ammoniumfluorid, zu einer pressfähigen Masse umgeformt werden.
Aus DE 10 2006 046 619 A1 ist es bekannt, einen SiO₂-Schlicker auf alkoholischer Basis mit hohem Füllgrad durch Zugabe von SiO₂-Rohstoffkomponenten mit aufeinander abgestimmter Teilchengrößenverteilung herzustellen, der streich- oder rakelfähig ist. Die Verarbeitung des Schlickers erfolgt mittels einer Rakeleinrichtung, die mit einem Schlickervorratsbehälter verbunden ist.
Aus der WO 2009/127438 A1 sind oberflächenmodifizierte SiO₂-Partikel und diese SiO₂-Partikel enthaltende Kieselsole bekannt. Die oberflächenmodifizierten SiO₂-Partikel sollen eine verbesserte Redispergierbarkeit in bestimmten organischen Lösemitteln, insbesondere in Toluol zeigen. Für die Herstellung der oberflächenmodifizierten SiO₂-Partikel werden wässrigem Kieselsol mit einem Wassergehalt von mehr als 50 Gew.-% Modifizierungsmittel zugesetzt, so dass sich die Si0₂-Partikel an ihrer Oberfläche mit organofunktionellen Gruppen belegen. Um diesen Prozess effizient durchzuführen, wird vor der Umsetzung mit dem Modifizierungsmittel Wasser entzogen, so dass der Gesamtgehalt an Wasser in dem Kieselsol zuletzt unter 15 Gew.-% liegen kann. Es folgen gegebenenfalls Zugaben von lonentauscher und eine erneute Verdünnung mit Isopropanol bevor das Kieselsol bei 40 - 50°C im Vakuum getrocknet wird und als oberflächenmodifiziertes SiO₂-Pulver anfällt. Das so erhaltene SiO₂-Pulver kann in Toluol leicht redispergiert werden ohne dass dabei Agglomeration eintritt. Bei der Redispergierung beträgt der Feststoffgehalt im Kieselsol 10 Gew.-%.

Auch in der EP 1 136 119 A1 geht es um eine Verbesserung der Redispergierung von SiO₂-Granulat. Es wird eine Kombination aus Gefriertrocknung und Sprühgefrieren vorgeschlagen. Als Ausgangssuspension wird eine wässrige SiO₂-Suspension mit einem Feststoffgehalt von 25 Gew.-% in flüssigen Stickstoff verdüst, anschließend erfolgt eine Sublimationstrocknung. Dabei fällt ein nahezu kugelförmiges SiO₂-Granulat an. Das SiO₂-Granulat wird erneut in Wasser durch Rühren und Ultraschallbehandlung dispergiert. Der Feststoffgehalt der redispergierten Suspension liegt bei etwa 0,4 Gew.-%. Die Untersuchung der Teilchengrößenverteilung zeigt, dass die Granulatfraktion unter den angewendeten Bedingungen vollständig redispergierbar ist.

Die DE 692 27 448 T2 betrifft ebenfalls ein Verfahren zur Herstellung eines redispergierbaren, nanoskaligen SiO₂-Pulvers durch Hydrolyse von Tetraethoxysilan in einer wässrigen Reaktionslösung. Die entstehenden Polykieselsäureteilchen werden abgetrennt und getrocknet und sind in Wasser oder in polaren organischen Lösemitteln mit Ultraschallunterstützung leicht redispergierbar. Die Trocknung erfolgt im Einzelfall auch als Kombination von Gefriertrocknung und Trocknung im Vakuum bei 120°C.

Weitere Dokumente zum Stand der Technik sind US 4 042 361 A, DE 103 44 189 A1 und EP 2 070 886 A1.
Aus US 4 042 361 A ist ein Verfahren zur Herstellung eines Quarzglasbauteils bekannt, für das ein Gießschlicker eingesetzt wird, der von einem SiO₂-Grundschlicker mit maximal 45 Gew.-% Feststoffgehalt ausgeht. Der Grundschlicker wird in der Fläche ausgegossen und getrocknet unter Bildung von mehr oder weniger groben Fragmenten aus getrocknetem SiO₂-Schlicker. Diese Fragmente werden bei Temperaturen im Bereich zwischen 1150°C und 1500°C gesintert (kalziniert), was zu einer Verdichtung der SiO₂-Teilchen führt. Danach folgt ein Mahlvorgang in einem flüssigen Medium, so dass ein neuer, zweiter SiO₂-Schlicker entsteht, der gießfähig ist. Dieser zweite Schlicker enthält verdichtete SiO₂-Teilchen mit Partikelgrößen zwischen 1 und 10 µm. Der zweite Schlicker wird beispielsweise zur Herstellung von Quarzglastiegeln eingesetzt, die im Temperaturbereich zwischen 1800°C und 1900°C gesintert werden.

Weiterhin ist aus DE 103 44 189 A1 ein Verfahren zur Herstellung eines Gussteils aus einem SiO₂-Schlicker bekannt, wobei nach dem Gießen des Schlickers in eine für Flüssigkeit undurchlässige Form zunächst ein gefrorener Blaukörper gebildet wird, der anschließend getrocknet und gesintert wird. Der SiO₂-Grundschlicker hat einen Feststoffgehalt von mindestens 80 Gew.-%.

In EP 2 070 886 A1 geht es um ein Verfahren zum stoffschlüssigen Fügen von Quarzglasbauteilen unter Einsatz einer hochkieselsäurehaltigen Verbindungsmasse. Die Verbindungsmasse kann in Form eines SiO₂-Schlickers eingesetzt werden, der Feststoffgehalte zwischen 82 Gew.-% bis 90 Gew.-% aufweist.

### Technische Aufgabenstellung

Die zuletzt erläuterten Verfahren dienen zur Herstellung von SiO₂-Partikeln oder Granulaten, die gute Redispergierbarkeit zeigen. Das gewünschte Endprodukt ist das SiO₂-Pulver beziehungsweise das SiO₂-Granulat.

Die Erfindung betrifft jedoch SiO₂-Schlicker und deren Weiterverarbeitung. Die vorgenannten SiO₂-Schlicker nach dem Stand der Technik sind aufgrund von optimierten Teilchengrößenverteilungen und Füllgrad der Suspension für unterschiedliche Weiterverarbeitungsmethoden neben dem üblichen Schlickerguss geeignet. Die Weiterverarbeitung des Schlickers muss jedoch zeitnah nach dem Homogenisieren erfolgen, um von den optimierten Schlickereigenschaften profitieren zu können. Die Schlickerkonsistenz kann sich nämlich durch Lagerung oder Transport verändern, so dass eine Herstellung unter Bevorratung eines flüssigen Schlickers nur unter großem Aufwand möglich ist.

Der Erfindung liegt daher die Aufgabe zugrunde, ein Verfahren zur Herstellung einer pastösen SiO₂-Masse unter Verwendung eines SiO₂-Schlickers anzugeben, das einfache Zwischenlager- und Transportbedingungen zulässt, ohne dass dadurch die Verarbeitbarkeit des Schlickers zur pastösen SiO₂-Masse beeinträchtigt wird. Weiterhin liegt der Erfindung die Aufgabe zugrunde eine geeignete Verwendung der pastösen SiO₂-Masse anzugeben.

### Allgemeine Beschreibung der Erfindung

Die vorstehende Aufgabe wird hinsichtlich des Verfahrens erfindungsgemäß dadurch gelöst, dass der SiO₂-Grundschlicker einen Feststoffgehalt an SiO₂-Partikeln im Bereich von 80 Gew.-% bis 90 Gew.-% aufweist und dass der Wiederbefeuchtungsschritt die Zugabe durch Aufträufeln oder Aufgießen von Flüssigkeit auf die SiO₂-Trockenmasse und ein Verteilen der Flüssigkeit mittels Durchkneten unter Ausbildung der pastösen knetbaren SiO₂-Masse mit einem Feststoffgehalt von mehr als 85 Gew.-% umfasst.

Ein Grundschlicker, bestehend aus einer Suspension von SiO₂-Partikeln in einem flüssigen Medium, wird durch mechanische Einwirkung wie Rühren oder Mahlen in einer Kugelmühle zu einem homogen SiO₂-Grundschlicker verarbeitet. Der Feststoffgehalt dieses Grundschlickers liegt im Bereich von 80 Gew.-% bis 90 Gew.-%.
Die Teilchengrößenverteilung der SiO₂-Partikel sowie deren Kornform beeinflussen die Fließeigenschaften des Grundschlickers wie auch letztlich das Sinterverhalten nach der Endverarbeitung des SiO₂-Schlickers. Ein Anteil geringer Mengen SiO₂-Nanoteilchen mit Teilchengrößen von weniger als 100 nm wirkt sich dabei auf das Fließverhalten des Schlickers insofern aus, als dass dadurch bei konstanter Rührgeschwindigkeit sich eine konstante Viskosität des Schlickers einstellt. Der Homogenisierungsschritt umfasst in der Regel einen Zeitraum von mehreren Tagen. Üblich ist es den SiO₂-Grundschlicker über mindestens 6 bis 12 Tagen oder sogar mehr auf einem Rollenbock zu homogenisieren.

Unmittelbar nach dem Homogenisierungsschritt wird der SiO₂-Grundschlicker nun zu einer festen Masse getrocknet, indem der Schlicker in eine flache Schale ausgegossen wird und bei Raumtemperatur oder erhöhter Temperatur in einem Trockenschrank stehen gelassen wird.

Die getrocknete Masse kann ohne großen Aufwand vor Ort bevorratet oder auch in diesem Zustand einfach transportiert werden. Denn in diesem Zustand tritt keine Sedimentation ein. Auch der Einfluss der Lager- oder Transporttemperatur, die für einen fließfähigen Grundschlicker von großer Bedeutung sein würde, ist hier untergeordnet. Die Lager- oder Transporttemperatur für den getrockneten Grundschlicker ist in einem weiten Temperaturbereich von -40 bis etwa +50 °C akzeptabel und trägt damit auch zu einem kostengünstigen Herstellungsverfahren bei.

Sobald die SiO₂-Masse auf ein Bauteil aufgetragen oder in anderer Weise formbar gemacht werden muss, wird die SiO₂-Trockenmasse zerkleinert und unter Zugabe durch Aufträufeln oder Aufgießen von Flüssigkeit wiederbefeuchtet. Dadurch wird eine knetbare SiO₂-Masse mit einem Feststoffanteil von mehr als 85 Gew.-% erhalten. Liegt der Feststoffgehalt unterhalb von 85 Gew.-% lässt die Formstabilität hinsichtlich der pastösen oder knetbaren Konsistenz der SiO₂-Masse nach, so dass die entsprechende Verarbeitung nicht mehr optimal vorgenommen werden kann, und es besteht die Gefahr einer Rissbildung beim Trocknen. Durch diese Wiederbefeuchtung entsteht eine mit einfachsten Mitteln formbare SiO₂-Masse, die eine pastöse oder knetbare Konsistenz aufweist.

Diese Masse kann mit den Händen oder einfachen Schabern oder Spachteln auf ein Substrat aufgetragen werden. Selbst eine Flüssigkeitszugabe, die den Feststoffgehalt auf denjenigen des ursprünglichen SiO₂-Grundschlickers einstellt, führt überraschenderweise nicht zu dem rheologischen Verhalten des ursprünglichen gießfähigen Grundschlickers, vielmehr bildet sich eine Knetgummi-ähnliche Masse. Diese bemerkenswerte Eigenschaft wird Wechselwirkungen zwischen den SiO₂-Partikeln untereinander zugeschrieben, die vorab während der Homogenisierung und der Trocknung stattgefunden haben, sowie den physikalisch-chemischen Bindungen und Wechselwirkungen zwischen den SiO₂- Partikeln und der Flüssigkeit beim Wiederbefeuchten. Insbesondere scheint das Einbringen von OH-Gruppen von Bedeutung zu sein, die sich an die SiO₂-Partikel anlagern und der wiederbefeuchteten Masse besondere Fließeigenschaft verleiht.

Vorteilhafterweise ist der SiO₂-Grundschlicker eine wässrige oder alkoholische Suspension.

Auch eine Mischung von Alkohol und Wasser, beispielsweise ein Ethanol-WasserGemisch, ist im Einzelfall vorteilhaft, da hiermit die Benetzungseigenschaften gegenüber den SiO₂-Partikeln einerseits und die Trocknungseigenschaften des Si0₂-Grundschlickers andererseits positiv beeinflusst werden. Aufgrund des höheren Dampfdrucks von Alkoholen gegenüber Wasser ist ein Grundschlicker auf Basis einer alkoholischen Suspension besonders geeignet, wenn die Trocknungszeit und -temperatur minimiert werden müssen. Beim Wiederbefeuchten der Trockenmasse kann sowohl Alkohol als auch Wasser verwendet werden. Die Auswahl hängt im Wesentlichen davon ab, wie schnell die Weiterverarbeitung der pastösen oder knetbaren SiO₂-Masse erfolgen soll, wobei durch Alkohol wiederbefeuchtete Massen binnen weniger Minuten verarbeitet werden müssen, da sie sehr schnell wieder abtrocknen. Dies kann aber durchaus im Hinblick auf eine produktive Fertigung von Vorteil sein.

Ein SiO₂-Grundschlicker mit einem Feststoffgehalt von 85 Gew.-% bis 88 Gew.-% hat sich in der Verarbeitung zu einer knetbaren SiO₂-Masse als besonders günstig erwiesen.

Es hat sich weiterhin bewährt, wenn der Feststoffanteil sich aus verschiedenen SiO₂-Teilchenfraktionen zusammensetzt. So ist beispielsweise eine Kombination von Granulaten aus nanoskaligen, amorphen SiO₂ mit einem Anteil grobkörniger SiO₂-Körnung geeignet das spätere Sinterverhalten der pastösen SiO₂-Masse zu optimieren.

Eine weitere vorteilhafte Ausgestaltung der Erfindung besteht darin, dass der SiO₂-Grundschlicker ein sogenanntes SiO₂-Sol umfasst, das durch Beimischen von SiO₂-Partikeln auf einen Feststoffgehalt im Bereich von 80 Gew.-% bis 90 Gew.-% eingestellt wird.

Ausgangsmaterial ist ein SiO₂-Sol aus kolloidalem SiO₂-Nanopartikeln mit Teilchengrößen kleiner 100 nm, bevorzugt im Bereich von 12 nm bis 20 nm, die in Wasser oder Isopropanol (oder anderen Alkoholen) dispergiert sind. Diesem SiO₂-Sol wird noch etwas SiO₂-Körnung beigemischt und man erhält auf einfache Weise einen SiO₂-Grundschlicker mit einem Feststoffgehalt im Bereich 80 Gew.-% bis 90 Gew.-%. Beimischen geringer Mengen von Sinterhilfsmitteln oder anderen Zusatzstoffen kann weiterhin von Vorteil sein.

Zur Optimierung des SiO₂-Grundschlickers wird dieser mindestens 6 Tage durch Rühren und/oder Mahlen, in der Regel in einer Kugelmühle auf einem Rollenbock, homogenisiert.

Insbesondere bei SiO₂-Grundschlickern, die ein SiO₂-Sol enthalten, hat es sich aber alternativ auch bewährt, die Homogenisierung in einem Vakuumkneter durchzuführen. Die Anwendung von Vakuum entfernt etwaige Gaseinschlüsse im Schlicker, so dass ein optimierter Schlicker erhalten wird.

Der Trocknungsschritt umfasst vorteilhafterweise das Ausgießen des SiO₂-Grundschlickers in eine flache Schale, in der der Schlicker relativ schnell zu einem festen Block trocknet.

Es hat sich bewährt, eine Trocknungsrate im Bereich von 3 bis 10% Gewichtsverlust pro Minute einzustellen. Bei kleinen Schlickermengen wird mit dieser Trocknungsrate nach etwa 5 bis maximal 15 Minuten für die SiO₂-Trockenmasse eine Restfeuchte von kleiner gleich 50% erreicht.

Hinsichtlich des Trocknungsschrittes ist es weiterhin vorteilhaft, die Trocknung des SiO₂-Grundschlickers bei Temperaturen im Bereich von etwa 20°C (Raumtemperatur) bis etwa 120°C auszuführen.

Bei alkoholischen Grundschlickern kann die Trocknung aufgrund des hohen Dampfdrucks von Alkohol bei Raumtemperatur oder nur leicht erhöhter Temperatur erfolgen. Beim Trocknen von alkoholischen Schlickern ist jedoch darauf zu achten, dass die Umgebung explosionsgeschützt ist.

Um die Restfeuchte sicher auf Null zu reduzieren, wird es bevorzugt, den Trocknungsschritt mindestens 12 Stunden lang durchzuführen.

Vorteilhaft ist es für Schlicker auf alkoholischer Basis eine Trocknungsphase von 24 Stunden bei Raumtemperatur einzuplanen, da kein Trockenschrank oder andere Heizaggregate erforderlich sind und mit diesen Trockenparametern keine nennenswerte Restfeuchte mehr vorhanden ist.

Bevor die Trockenmasse wiederbefeuchtet wird, ist es vorteilhaft die Trockenmasse zunächst grob zu zerkleinern und anschließend mit einigen Mahlkörpern aus Quarzglas in einer beweglich gelagerten Kunststoffflasche zu einem Pulver zu zermahlen, ohne jedoch die im ursprünglichen Grundschlicker eingestellte SiO₂-Partikelgröße merklich zu verändern.

Durch diesen Zerkleinerungsschritt, beispielweise in einem sogenannten Tubular-Mischer, wird über eine Zeitdauer von etwa 4 bis 8 Stunden eine optimale Zerkleinerung der Trockenmasse erreicht, ohne die Gefahr des Eintrags von störendem Fremdmaterial.

Für den Wiederbefeuchtungsschritt hat es sich als vorteilhaft erwiesen, Flüssigkeit in Form von Wasser oder Alkohol oder einem Gemisch von Wasser und Alkohol auf die zuvor zerkleinerte SiO₂-Trockenmasse zu geben.

Es hat sich bewährt, wenn das Verteilen der Flüssigkeit mit der zerkleinerten Trockenmasse mittels Durchkneten von Hand erfolgt, wobei zur Vermeidung von Kontaminationen entsprechende Handschuhe (Nitril-Handschuhe) getragen werden.

Diese Verfahrensweise ist insbesondere empfehlenswert wenn nur Kleinmengen von weniger als einem Kilogramm wiederbefeuchtet werden.

### Ausführungsbeispiele

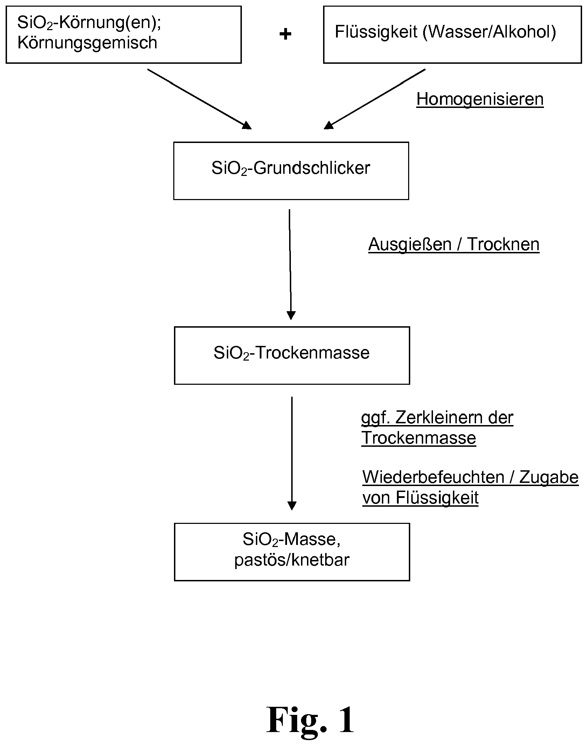

Im Folgenden wird die Erfindung anhand von Ausführungsbeispielen näher erläutert. Als einzige Figur zeigt
- **Figur 1**: ein Ablaufdiagramm des erfindungsgemäßen Verfahrens.

### Beispiel 1

Es wird ein homogener Grundschlicker hergestellt. Für einen Ansatz von 10 kg SiO₂-Grundschlicker werden in einer mit Quarzglas ausgekleideten Trommelmühle mit 20 Liter Nennvolumen 8,2 kg einer amorphen Quarzglaskörnung aus natürlichen Rohstoff mit Korngrößen im Bereich zwischen 250 µm und 650 µm mit 1,8 kg deionisiertem Wasser mit einer Leitfähigkeit von weniger als 3 µS vermischt. Diese Mischung wird mittels Mahlkugeln aus Quarzglas auf einem Rollenbock bei 23 U/min während einer Dauer von 16 Stunden soweit vermahlen, dass sich ein homogener Grundschlicker mit einem Feststoffgehalt von 80 % bildet. Die nach dem Vermahlen der Quarzglaskörnung erhaltenen SiO₂-Körnungsteilchen sind splittriger Natur. Diesem Schlicker wird weitere amorphe SiO₂-Körnung mit Teilchengrößen um 5 µm zugemischt bis ein Feststoffgehalt von 85 Gew.-% erreicht ist. Diese Mischung wird erneut in einer Trommelmühle für 12 Stunden bei einer Drehzahl von 25 U/min homogenisiert. Für Anwendungen mit besonders hohen Anforderungen an die Stabilität und Homogenität der erfindungsgemäßen Knetmasse wird eine längere Homogenisierungsdauer eingestellt oder es ist ergänzend dazu ein Trockenvormischen des SiO₂-Pulvers vorgesehen, wie dies weiter unten anhand Beispiel 2 näher erläutert wird.

Der so erhaltene Schlicker hat einen Feststoffgehalt von 85 % und eine Dichte von 2,0 g/cm³. Dieser SiO₂-Grundschlicker wird nun in flache Behälter aus Edelstahl oder in Kunststoffschalen ausgegossen, wobei eine Füllhöhe von ca. 3 cm erreicht wird. Diese so gefüllten Behälter werden in einen Trockenschrank gestellt. Die Trocknung der Masse erfolgt bei 50°C für eine Dauer von 12 Stunden. Bei diesen Bedingungen beträgt die Trocknungsrate innerhalb der ersten 30 Minuten etwa 8 % pro Minute, - bezogen auf den anfänglichen höheren Feuchtigkeitsgehalt zu Beginn der Messdauer.

Die Trockenmasse löst sich leicht von dem Behälter und wird zunächst per Hand grob zerkleinert. Etwa 200 g werden dann zusammen mit 6 Mahlkugeln in eine 2-Liter-Kunststoffflasche gegeben und in einem Tubular-Mischer 6 Stunden lang in einer Taumelbewegung gehalten. Das dabei erhaltene Pulver der Trockenmasse wird zur Lagerung in luftdicht verschließbare Flaschen gefüllt. In dieser Form ist die aufbereitete Trockenmasse praktisch unbegrenzt lagerfähig und kann ohne weitere Umstände auch in größeren Gebinden transportiert werden.

Zur Verarbeitung einer SiO₂-Knetmasse für Reparaturzwecke ist nur eine geringe Menge aufbereitete Trockenmasse wieder zu befeuchten. Dafür ist ausreichend 10 g der aufbereiteten Trockenmasse abzuwiegen und diese Menge mit 1,2 g deionisiertem Wasser mit einem Leitwert von kleiner 3 µS mittels einer Pipette auf die SiO₂-Trockenmasse zu beträufeln. Das Vermischen der Trockenmasse mit dem Wasser erfolgt binnen weniger Minuten durch Kneten per Hand, wobei zur Vermeidung von Kontaminationen, insbesondere dem Eintrag von Alkalien, Nitril-Handschuhe getragen werden. Die so aufgetragene, pastöse SiO₂-Masse hat einen Feststoffgehalt von etwa 89 Gew.-%. Sie trocknet sehr schnell und wird anschließend mit einem Standardsinterprogramm etwa 3 Stunden bei 1200°C gesintert.

### Beispiel 2

Alternativ zu dem in Beispiel 1 angegebenen SiO₂-Grundschlicker wird ein Schlicker auf Ethanol-Basis hergestellt, indem 1,5 kg synthetische Quarzglaskörnung aus mit einer mittleren Teilchengröße zwischen 5 µ und 30 µm, sowie 50 g SiO₂-Nanopartikel mit mittlerer Teilchengröße von 50 nm eingewogen und mit 290 ml Ethanol für 12 Tage auf dem Rollenbock homogenisiert werden.

Die synthetische Quarzglaskörnung hat eine sphärische Kornform. Der Feststoffgehalt dieses SiO₂-Grundschlickers beträgt etwa 87 %.

Die über mehrere und vorzugsweise mindestens 12 Tage andauernde Homogenisierungs-Behandlung des Schlickers bewirkt eine Absenkung des pH-Wertes auf weniger als 5.

In einer alternativen Verfahrensweise wird das dem Schlicker zuzufügende SiO₂-Pulver vorab 0,5 Stunden oder mehr trocken vorgemischt, wie etwa in einem Taumelmischer. In diesem Fall genügt eine wesentliche kürzere Homogenisierungsdauer ab sechs Tagen auf dem Rollenbock für eine hinreichende Homogenisierung und Stabilisierung des Schlickers.

Der auf die eine oder die alternative Art homogenisierte Schlicker zeichnet sich durch hohe Stabilität im Sinne einer geringen Neigung zu Entmischung oder Absetzung sowie durch Fließeigenschaften aus, die auch seine unmittelbare Verwendung als Gieß- oder Auftrags-Schlicker vorteilhaft ermöglichen würden.

Zur Herstellung der erfindungsgemäßen Knetmasse folgt nun jedoch die Trocknung, indem der Grundschlicker in flache Schalen ausgegossen und 24 Stunden bei Raumtemperatur stehen gelassen wird. Der Gewichtsverlust bzw. die Trocknungsrate liegt in diesem Fall innerhalb der ersten 30 Minuten bei etwa 4 bis 5 % pro Minute - bezogen auf den anfänglichen Feuchtigkeitsgehalt zu Beginn der Messung. Es entsteht ein etwa 12 mm dicker Block aus SiO₂-Trockenmasse, der - wie in Beispiel 1 geschildert - zunächst grob, dann fein zerkleinert wird, so dass die entstehende pulverisierte SiO₂-Trockenmasse luftdicht in Flaschen gelagert werden kann.

Die Wiederbefeuchtung erfolgt in gleicher Weise wie in Beispiel 1 dargestellt. Die wieder befeuchtete pastöse SiO₂-Masse wird beispielsweise zur Reparatur von Quarzglas-Bauteilen mit einer opaken SiO₂-Oberflächenschicht eingesetzt. Zu diesem im Bereich der zu reparierenden Oberflächenschicht eine dünne Schicht aufgetragen, zu einer sogenannten Grünkörperschicht getrocknet und anschließend in bekannter Weise in einem Sinterofen bei einer Temperatur um 1200 °C zu einer rissfreien, homogenen SiO₂-Schicht gesintert.

### Beispiel 3

Zu einem kommerziell von der Firma Fuso Chemical Co., Ltd. erhältlichen SiO₂-Sol in Isopropanol mit der Bezeichnung PL1-IPA und einen SiO₂ Anteil von 12,5% mit Teilchengrößen kleiner 100 nm wird amorphe SiO₂-Körnung mit Teilchengrößen um 5 µm zugemischt bis ein Feststoffgehalt von 85 Gew.-% erreicht ist. Diese Mischung wird in einem Vakuumkneter homogenisiert und entlüftet. Der so erhaltene, homogene SiO₂-Grundschlicker hat einen Feststoffgehalt von 85 % und eine Dichte von 2,0 g/cm³. Dieser alkoholische SiO₂-Grundschlicker wird nun in flache Behälter aus Edelstahl oder in Kunststoffschalen ausgegossen, wobei eine Füllhöhe von 2 cm bis 3 cm erreicht wird.

Diese so gefüllten Behälter werden bei Raumtemperatur 12 Stunden getrocknet, oder alternativ eine Stunde lang in einem explosionsgeschützten Trockenschrank bei 40°C. Die SiO₂-Trockenmasse wird dann in der gleichen Art zerkleinert und wiederbefeuchtet wie in Beispiel 1 angegeben. Auch diese wieder befeuchtete, pastöse SiO₂-Masse kann zu Reparaturzwecken verwendet werden, wie in Beispiel 2 erläutert.

## Patentansprüche

1. Verfahren zur Herstellung einer pastösen SiO₂-Masse unter Verwendung eines homogenisierten SiO₂-Grundschlickers, wobei der SiO₂-Grundschlicker einem Trocknungsschritt unter Bildung einer SiO₂-Trockenmasse unterzogen und mittels eines Wiederbefeuchtungsschrittes weiterverarbeitet wird, **dadurch gekennzeichnet, dass** der SiO₂-Grundschlicker einen Feststoffgehalt an SiO₂-Partikeln im Bereich von 80 Gew.-% bis 90 Gew.-% aufweist und dass der Wiederbefeuchtungsschritt die Zugabe durch Aufträufeln oder Aufgießen von Flüssigkeit auf die SiO₂-Trockenmasse und ein Verteilen der Flüssigkeit mittels Durchkneten unter Ausbildung der pastösen knetbaren SiO₂-Masse mit einem Feststoffgehalt von mehr als 85 Gew.-% umfasst.

2. Verfahren nach Anspruch 1, **dadurch gekennzeichnet, dass** der SiO₂-Grundschlicker eine wässrige und/oder alkoholische Suspension ist.

3. Verfahren nach Anspruch 1 oder 2, **dadurch gekennzeichnet, dass** der SiO₂-Grundschlicker einen Feststoffgehalt von 85 Gew.-% bis 88 Gew.-% aufweist.

4. Verfahren nach einem der vorhergehenden Ansprüche, **dadurch gekennzeichnet, dass** SiO₂-Grundschlicker ein SiO₂-Sol umfasst, das durch Beimischen von SiO₂-Partikeln auf einen Feststoffgehalt im Bereich von 80 Gew.-% bis 90 Gew.-% eingestellt wird.

5. Verfahren nach einem der vorhergehenden Ansprüche, **dadurch gekennzeichnet, dass** die Homogenisierung des SiO₂-Grundschlickers in einem Vakuumkneter erfolgt.

6. Verfahren nach einem der vorhergehenden Ansprüche, **dadurch gekennzeichnet, dass** der Trocknungsschritt das Ausgießen des SiO₂-Grundschlickers umfasst und dass sich eine Trocknungsrate im Bereich von 3 % bis maximal 10 % Gewichtsverlust pro Minute für die SiO₂-Trockenmasse einstellt.

7. Verfahren nach einem der vorhergehenden Ansprüche, **dadurch gekennzeichnet, dass** der Trocknungsschritt bei Temperaturen im Bereich von 20°C bis 120°C stattfindet.

8. Verfahren nach einem der vorhergehenden Ansprüche, **dadurch gekennzeichnet, dass** der Trocknungsschritt bei Raumtemperatur mindestens 12 Stunden lang durchgeführt wird.

9. Verfahren nach einem der vorhergehenden Ansprüche, **dadurch gekennzeichnet, dass** die SiO₂-Trockenmasse vor dem Wiederbefeuchtungsschritt in mindestens einem Zerkleinerungsschritt zerkleinert wird.

10. Verfahren nach einem der vorhergehenden Ansprüche, **dadurch gekennzeichnet, dass** der Wiederbefeuchtungsschritt durch Zugabe von Flüssigkeit in Form von Wasser oder Alkohol oder einem Gemisch von Wasser und Alkohol auf die SiO₂-Trockenmasse erfolgt.

11. Verfahren nach einem der vorhergehenden Ansprüche, **dadurch gekennzeichnet, dass** das Durchkneten von Hand erfolgt.

12. Verwendung der nach dem Verfahren nach einem der Ansprüche 1 bis 11 hergestellten pastösen SiO₂-Masse als Reparaturmasse.

## Claims

1. A process for producing a paste-like SiO₂ composition using a homogenized SiO₂ base slip, wherein the SiO₂ base slip is subjected to a drying step to form a dry SiO₂ composition and is processed further by means of a remoistening step, **characterized in that** the SiO₂ base slip has a solids content of SiO₂ particles in the range of 80% by wt. to 90% by wt., and that the remoistening step comprises the addition of liquid by dripping or pouring liquid onto the dry SiO₂ composition and distributing the liquid by way of thorough kneading to form a paste-like kneadable SiO₂ composition having a solids content of more than 85% by weight.

2. The process according to claim 1, **characterized in that** the SiO₂ base slip is an aqueous and/or alcoholic suspension.

3. The process according to claim 1 or 2, **characterized in that** the SiO₂ base slip has a solids content of 85% by wt. to 88% by wt.

4. The process according to any one of the preceding claims, **characterized in that** the SiO₂ base slip comprises a SiO₂ sol which is adjusted by adding SiO₂ particles to a solids content in the range of 80% by wt. to 90% by wt.

5. The process according to any one of the preceding claims, **characterized in that** the SiO₂ base slip is homogenized in a vacuum kneader.

6. The process according to any one of the preceding claims, **characterized in that** the drying step comprises pouring the SiO₂ base slip and that a drying rate is obtained in the range of 3% to not more than 10% weight loss per minute for the dry SiO₂ composition.

7. The process according to any one of the preceding claims, **characterized in that** the drying step takes place at temperatures in the range of 20°C to 120°C.

8. The process according to any one of the preceding claims, **characterized in that** the drying step is carried out at room temperature for at least 12 hours.

9. The process according to any one of the preceding claims, **characterized in that** the dry SiO₂ composition is comminuted in at least one comminuting step prior to the remoistening step.

10. The process according to any one of the preceding claims, **characterized in that** the remoistening step is carried out by adding liquid in the form of water or alcohol or a mixture of water and alcohol onto the dry SiO₂ composition.

11. The process according to any one of the preceding claims, **characterized in that** the thorough kneading is done by hand.

12. Use of the paste-like SiO₂ composition produced according to the process according to any one of claims 1 to 11, as a repair composition.

## Revendications

1. Procédé de fabrication d'une masse pâteuse de SiO₂ avec utilisation d'une barbotine de base de SiO₂ homogénéisé, la barbotine de base de SiO₂ étant soumis à une étape de séchage avec formation d'une masse sèche de SiO₂ et transformé au moyen d'une étape de réhumidification, caractérisé ce que la barbotine de base de SiO₂ présente une teneur en matières solides de particules de SiO₂ située dans la plage de 80% en poids à 90% en poids et en ce que l'étape de réhumidification comprend l'adjonction par versement goutte à goutte ou par arrosage de liquide sur la masse sèche de SiO₂ et par répartition du liquide au moyen de pétrissage avec formation de la masse de SiO₂ pâteuse pétrissable ayant une teneur en matières solides de plus de 85% en poids.

2. Procédé selon la revendication 1, **caractérisé en ce que** la barbotine de base de SiO₂ est une suspension aqueuse et/ou alcoolique.

3. Procédé selon la revendication 1 ou 2, **caractérisé en ce que** la barbotine de base de SiO₂ présente une teneur en matières solides de 85% en poids à 88% en poids.

4. Procédé selon l'une quelconque des revendications précédentes, **caractérisé en ce que** la barbotine de base de SiO₂ comprend un sol de SiO₂ qui est réglé sur une teneur en matières solides située dans la plage de 80% en poids à 90% en poids par addition de particules de SiO₂.

5. Procédé selon l'une quelconque des revendications précédentes, **caractérisé en ce que** l'homogénéisation de barbotine de base de SiO₂ est réalisée dans un malaxeur sous vide.

6. Procédé selon l'une quelconque des revendications précédentes, **caractérisé en ce que** l'étape de séchage comprend le versement de barbotine de base de SiO₂ et **en ce qu'**un taux de séchage situé dans la plage de 3% à maximum 10% de perte en poids par minute se règle pour la masse sèche de SiO₂.

7. Procédé selon l'une quelconque des revendications précédentes, **caractérisé en ce que** l'étape de séchage a lieu à des températures situées dans la plage de 20°C à 120°C.

8. Procédé selon l'une quelconque des revendications précédentes, **caractérisé en ce que** l'étape de séchage est réalisée à température ambiante pendant au moins 12 heures.

9. Procédé selon l'une quelconque des revendications précédentes, **caractérisé en ce que** la masse sèche de SiO₂, avant l'étape de réhumidification, est broyée pendant au moins une étape de broyage.

10. Procédé selon l'une quelconque des revendications précédentes, **caractérisé en ce que** l'étape de réhumidification est réalisée par adjonction de liquide sous forme d'eau ou d'alcool ou d'un mélange d'eau et d'alcool sur la masse sèche de SiO₂.

11. Procédé selon l'une quelconque des revendications précédentes, **caractérisé en ce que** le pétrissage est réalisé à la main.

12. Utilisation de la masse de SiO₂ pâteuse, fabriquée selon l'une quelconque des revendications1 à 11, en tant que masse de réparation.
